(19) Europäisches Patentamt
European Patent Office
Office européen des brevets

(11) **EP 3 185 032 B1**

(12) **FASCICULE DE BREVET EUROPEEN**

(45) Date de publication et mention
de la délivrance du brevet:
**17.04.2019 Bulletin 2019/16**

(51) Int Cl.:
**G01S 5/02** *(2010.01)*     **G01S 19/00** *(2010.01)*
**H04B 7/185** *(2006.01)*

(21) Numéro de dépôt: **16204101.6**

(22) Date de dépôt: **14.12.2016**

(54) **COMPENSATION DU CHEMIN DE TRANSMISSION DANS UN RÉSEAU DE COMMUNICATION UTILISANT UNE PLURALITÉ DE SATELLITES.**

LAUFWEG AUSGLEICH IN EINEM KOMMUNIKATIONSNETWERK MIT EINER VIELZAHL VON SATELLITEN.

COMPENSATION OF THE TRANSMISSION PATH IN A COMMUNICATION NETWORK USING A PLURALITY OF SATELLITES.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2015 FR 1502676**

(43) Date de publication de la demande:
**28.06.2017 Bulletin 2017/26**

(73) Titulaire: **Thales**
**92400 Courbevoie (FR)**

(72) Inventeurs:
• **CALMETTES, Thibaud**
**31100 TOULOUSE (FR)**
• **MONNERAT, Michel**
**31100 TOULOUSE (FR)**

(74) Mandataire: **Priori, Enrico**
**Marks & Clerk France**
**Immeuble "Visium"**
**22, avenue Aristide Briand**
**94117 Arcueil Cedex (FR)**

(56) Documents cités:
| | |
|---|---|
| **EP-A1- 2 587 691** | **EP-A1- 2 963 438** |
| **WO-A2-01/48941** | **WO-A2-01/91310** |
| **US-A- 5 233 626** | **US-A- 5 644 572** |
| **US-A1- 2014 354 481** | |

**Description**

L'invention se situe dans le domaine des communications par satellite, et traite plus particulièrement d'un procédé de communications satellitaires dans lequel les liaisons de communication sont réalisées par une pluralité de satellites.

Plusieurs initiatives récentes visent à déployer des constellations de satellites « massives ». On entend par massives le fait qu'elles comprennent plus de 100 satellites. C'est le cas par exemple pour deux initiatives publiques ayant pour objectif un déploiement d'ici 2020 : OneWeb et SpaceX.

Cependant, l'approche de la technologie télécom pour ces solutions reste très proche des technologies connues. Elle s'appuie en particulier sur la réalisation de spots satellitaires, chacun des spots étant desservi par l'un des faisceaux d'un satellite particulier.

Cette approche ne tire pas réellement partie de l'aspect massif de la constellation : à un instant donné, un récepteur n'est en liaison qu'avec un seul satellite, alors que plusieurs satellites sont généralement en visibilité. Le bilan de liaison est donc dimensionné dans le cadre de cette liaison unique.

Pour des contraintes de dimensionnement des antennes relatives à la taille recherchée des spots satellitaires, cette approche est plutôt orientée vers des constellations en orbite terrestre basse (en anglais Low Earth Orbit, ou LEO). Cependant, l'utilisation de satellites LEO conduit à des effets Doppler plus forts, des visibilités plus courtes, et donc plus de transferts intercellulaires (en anglais handover). Les satellites LEO ont une couverture moins étendue que des satellites en orbite plus élevée, et nécessitent de ce fait des liens inter-satellites (en anglais Inter Satellite Links, ou ISL), et/ou plus de passerelles satellitaires au sol.

La dimension des spots ne peut être réduite autant que souhaitée pour des raisons d'encombrement de l'antenne sur les satellites. Cela génère donc également la nécessité de gérer un accès multiple résiduel, et entraine de ce fait une réduction de disponibilité pour l'utilisateur.

Enfin, la mise en oeuvre de spots satellitaires impacte le design du satellite, et en particulier le design de son antenne. Elle requiert de ce fait une forte intelligence dans la gestion de la mise en réseau.

L'invention a pour objet un nouveau mode de déploiement d'un réseau satellitaire, adapté à l'utilisation de constellations de satellites « massives », et qui consiste à compléter ou abandonner la répartition traditionnelle par faisceaux, pour exploiter le fait que la taille des constellations permette d'avoir simultanément plusieurs satellites en visibilité des différents points du globe.

Pour cela, elle propose de transmettre les signaux conjointement par le biais de plusieurs satellites distincts. La transmission par chacun des satellites tient compte de la position de l'émetteur, du récepteur et du satellite lui-même, une compensation des décalages liés à la propagation du signal étant réalisée de manière à ce que les signaux soient recombinés au niveau du récepteur sans générer d'interférences. L'invention se place indifféremment à l'émission ou à la réception, et propose un système couplé dans lequel la localisation de chacun des acteurs de la transmission et la recombinaison des signaux vont de paire.

L'invention consiste donc en un réseau de communications par satellite comprenant au moins une station d'émission, au moins une station de réception, et une pluralité de satellites. Le réseau selon l'invention est caractérisé en ce qu'un signal transmis entre la station d'émission et la station de réception est relayé par une pluralité de satellites en visibilité commune de ces deux stations. Il est également caractérisé en ce qu'au moins un équipement parmi la station d'émission, la station de réception et les satellites par lesquels le signal est relayé connait la position de la station d'émission, la position de la station de réception, et la position des satellites par lesquels le signal est relayé. Cet équipement est configuré pour séparer les signaux relayés par les satellites, et pour calculer, pour chacun des signaux, au moins un décalage apporté par la propagation du signal, à partir de la position de la station d'émission, de la position de la station de réception, et de la position du satellite par lequel il est transmis, puis pour appliquer au signal au moins un décalage inverse du ou desdits décalages calculés.

Selon un mode de réalisation du réseau de communications selon l'invention, le calcul du ou des décalages est réalisé en outre à partir d'au moins un parmi un vecteur vitesse de la station d'émission, un vecteur vitesse de la station de réception, et un vecteur vitesse du satellite par lequel le signal est relayé.

Ainsi, le vecteur vitesse du satellite est nécessaire lorsque celui-ci n'est pas un satellite géostationnaire, afin de calculer et compenser l'effet Doppler introduit par le déplacement de ce satellite.

La connaissance du vecteur vitesse de la station d'émission et/ou de réception est appréciable lorsque celle(s)-ci se déplace à une vitesse significative par rapport à la vitesse du satellite.

Selon différents modes de réalisation du réseau de communications selon l'invention, le calcul du ou des décalages comprend au moins un parmi le calcul d'un décalage temporel, d'un décalage fréquentiel, d'un décalage en phase et d'un décalage en puissance.

Selon un mode de réalisation du réseau de communications selon l'invention, la séparation des signaux relayés par les satellites est réalisée grâce à l'utilisation d'une antenne active.

Selon un autre mode de réalisation du réseau de communications selon l'invention, la séparation des signaux relayés par les satellites est réalisée grâce à l'utilisation d'une pluralité d'antennes directives.

Selon un autre mode de réalisation du réseau de communications selon l'invention, le signal transmis est modulé selon une technique d'étalement de spectre par séquence directe. Dans ce mode de réalisation, la station d'émission est configurée pour séparer les signaux relayés par les satellites en modulant chacun de ces signaux par une séquence distincte. En outre, la station de réception est configurée pour séparer les signaux reçus relayés par chacun des satellites à partir de la séquence utilisée à l'émission.

Selon un autre mode de réalisation d'un réseau de communications selon l'invention, une fréquence porteuse du signal transmis par la station d'émission est adaptée en fonction du satellite relayant la transmission. Dans ce mode de réalisation, la station d'émission est configurée pour séparer les signaux relayés par les satellites en appliquant à chacun un décalage fréquentiel distincts. Ces signaux sont donc émis sur des fréquences porteuses différentes. La station de réception est configurée pour séparer les signaux relayés par chacun des satellites à partir de leur fréquence porteuse.

Selon un autre mode de réalisation d'un réseau de communications selon l'invention, la station d'émission est configurée pour séparer les signaux relayés par les satellites, et pour répéter le signal transmis, après lui avoir appliqué les décalages inverses appropriés. Les décalages inverses appliqués au signal pour chacune des répétitions sont calculés à partir d'hypothèses différentes d'une direction de déplacement du récepteur.

Avantageusement, la station d'émission est configurée pour émettre un signal dédié à une calibration des décalages inverses appliqués aux signaux.

Avantageusement, la station d'émission et la station de réception sont en outre configurées pour échanger un message de synchronisation successivement par chacun des satellites utilisés pour relayer la transmission avant de transmettre le signal.

Avantageusement, la station d'émission et la station de réception sont en outre configurées pour échanger un message de synchronisation simultanément par chacun des satellites utilisés pour relayer la transmission avant de transmettre le signal.

L'invention adresse également un procédé d'émission d'un signal depuis une station d'émission vers une station de réception dans un réseau de communications par satellite, ledit réseau comprenant une pluralité de satellites en visibilité commune de la station d'émission et de la station de réception, ladite station d'émission connaissant sa position ainsi que celles de la station de réception et des satellites en visibilité commune, et étant configurée pour séparer les signaux transmis vers les satellites en visibilité commune. Le procédé selon l'invention est caractérisé en ce qu'il comprend les étapes de :

- sélection, parmi les satellites en visibilité commune, d'une pluralité de satellites utilisés pour relayer la transmission du signal,
- calcul, pour chacun des satellites sélectionnés, d'au moins un décalage lié à la propagation du signal à partir de la position de la station d'émission, de la position de la station de réception, et de la position dudit satellite,
- calcul, pour chacun des satellites sélectionnés, d'un signal pré-compensé en appliquant au moins un décalage inverse du ou des décalages calculés, et
- émission, vers chacun des satellites sélectionnés, du signal pré-compensé qui lui est associé.

L'invention adresse ensuite un procédé de réception d'un signal transmis entre une station d'émission et une station de réception dans un réseau de communications par satellite, ledit réseau comprenant une pluralité de satellites en visibilité commune de la station d'émission et de la station de réception, ladite station de réception connaissant sa position et celles de la station d'émission et des satellites en visibilité commune, et étant configurée pour séparer les signaux reçus depuis les satellites du réseau, le signal étant relayé par une pluralité de satellites parmi les satellites en visibilité commune. Le procédé selon l'invention est caractérisé en ce qu'il comprend les étapes de :

- sélection, parmi les satellites en visibilité commune, d'une pluralité de satellites utilisés pour relayer la transmission du signal,
- calcul, pour chacun des satellites sélectionnés, d'au moins un décalage lié à la propagation du signal à partir de la position de la station d'émission, de la position de la station de réception, et de la position dudit satellite,
- réception du signal depuis chacun des satellites sélectionnés,
- calcul, pour chacun des satellites sélectionnés, d'un signal compensé en appliquant au signal reçu au moins un décalage inverses du ou des décalages calculés, et
- sommation de l'ensemble des signaux compensés.

L'invention adresse enfin un procédé de répétition d'un signal dans un satellite lors de la transmission d'un signal entre une station d'émission et une station de réception dans un réseau de communications par satellite, ledit satellite étant un parmi une pluralité de satellites du réseau en visibilité commune de la station d'émission et de la station de réception, ledit satellite connaissant sa position, la position de la station d'émission, et la position de la station de réception, et disposant de moyens de séparation des signaux reçus depuis l'émetteur et le récepteur. Le procédé selon l'invention est caractérisé en ce le signal est relayé par une pluralité de satellites, et en ce qu'il comprend les étapes de :

- réception du signal transmis depuis la station d'émission,
- calcul d'au moins un premier décalage lié à la propagation du signal entre l'émetteur et le satellite à partir de la position du satellite, et de la position de l'émetteur,

- calcul d'au moins un deuxième décalage lié à la propagation du signal entre le satellite et le récepteur à partir de la position du satellite et de la position du récepteur,
- calcul d'un signal compensé, en appliquant au signal reçu des décalages inverses aux premiers et aux deuxièmes décalages calculés, et
- émission du signal compensé vers la station de réception.

L'invention s'applique également aux équipements suivants :

- Station d'émission configurée pour mettre en oeuvre un procédé d'émission d'un signal tel que décrit précédemment.
- Station de réception configurée pour mettre en oeuvre un procédé de réception d'un signal tel que décrit précédemment.
- Satellite configuré pour mettre en oeuvre un procédé de répétition d'un signal tel que décrit précédemment.

***Description***

L'invention sera mieux comprise et d'autres caractéristiques et avantages apparaîtront mieux à la lecture de la description qui suit, donnée à titre non limitatif, et grâce aux figures annexées parmi lesquelles :

- la figure 1 présente un réseau satellitaire dans lequel l'émetteur dispose de moyens de séparation des signaux, et où l'invention est mise en oeuvre selon un premier mode de réalisation,
- la figure 2 présente un réseau satellitaire dans lequel le récepteur dispose de moyens de séparation des signaux, et où l'invention est mise en oeuvre selon un deuxième mode de réalisation,
- la figure 3 présente un réseau satellitaire dans lequel chacun des satellites dispose de moyens de séparation des signaux, et où l'invention est mise en oeuvre selon un troisième mode de réalisation,
- la figure 4 présente un diagramme des étapes réalisées par le procédé de communication selon l'invention lorsqu'il est exécuté à l'émission, et
- la figure 5 présente un diagramme des étapes réalisées dans le procédé de communication selon l'invention lorsqu'il est exécuté à la réception,
- la figure 6 présente un diagramme des étapes réalisées dans le procédé de communication selon l'invention lorsqu'il est exécuté par un satellite.

L'invention se place dans le cadre d'un réseau satellitaire, en particulier mais pas nécessairement lorsque celui-ci est massif, c'est-à-dire lorsqu'il comprend un nombre de satellites tel que plusieurs d'entre eux sont généralement en visibilité d'une même zone géographique.

L'invention peut se substituer à un réseau satellitaire dont le déploiement est réalisé par faisceaux, mais peut également s'intégrer en complément d'un tel déploiement satellitaire.

Dans la suite, on parlera d'émetteur et de récepteur. On entend par émetteur l'équipement à l'origine de la transmission, et par récepteur l'équipement recevant la transmission. Ces équipements peuvent indifféremment être des stations d'émission ou de réception, comme des passerelles satellites, des terminaux, des téléphones satellites, des balises de détresse, ou tout autre équipement adapté aux communications par satellite. En outre, l'invention s'applique également aux signaux de télémesure télécommande du satellite, servant à la surveillance et à la programmation du satellite lui-même. Dans ce cas, le récepteur et le satellite sont une seule et même entité, la diversité provenant de plusieurs stations d'émission transmettant la même télécommande, ou d'une même station d'émission disposant d'antennes à différentes positions géographiques, ce qui permet d'appliquer le dispositif à plusieurs satellites à la fois en combinant les signaux sur le réseau d'antennes de manière à ce que la recombinaison en phase soit cohérente uniquement dans la direction voulue.

On parlera également de voie montante et de voie descendante. Les communications ayant pour trajectoire le passage d'un émetteur à un satellite, et la retransmission du signal depuis le satellite vers un récepteur, la voie montante désigne le segment émetteur - satellite, tandis que la voie descendante désigne le segment satellite - récepteur.

Enfin, on parlera de satellite en visibilité commune lorsqu'un satellite est visible à la fois par l'émetteur et le récepteur. Ces satellites ne sont pas nécessairement dans une même zone, et ne sont pas nécessairement en visibilité l'un de l'autre.

A ce jour, de par la nouveauté de déploiement des constellations de satellites massives, il n'est connu qu'une seule solution utilisant les visibilités multiples, et ce non dans le but de mettre en oeuvre un réseau de communication, mais pour permettre la localisation d'une balise de détresse de position inconnue. Cette solution est présentée dans la demande de brevet Française FR 1401510. Dans ce système, implémenté sous le nom de MEOSAR (acronyme pour Médium Eart Orbit Search And Rescue), un signal de détresse est émis par une balise, et retransmis vers une passerelle satellite par l'ensemble des satellites en visibilité de la balise et de la station. La passerelle parcourt une grille de positions possibles de la balise de détresse, et applique, pour chaque point de la grille, des décalages différents à chacun des signaux reçus, les décalages étant fonction de la position de la grille testée, du satellite, et de la position de la passerelle satellite. Les signaux sont ensuite recombinés. Une version alternative à cette solution est présentée dans la demande de brevet EP 2 587 691 A1, où les décalages temporels et fréquentiels entre les signaux reçus depuis les différents satellites sont estimés par corrélation de manière à recombiner ces signaux pour améliorer le rapport signal à bruit.

Voir aussi: WO01/91310 A2 (Hughes Electronics Corp (US)).

La présente invention propose une solution de communication par satellite alternative aux techniques conventionnelles de déploiement satellite par faisceau, moins couteuse, plus efficace, et adaptée aux constellations de satellites dites « massives ». Pour ceci, elle étend le procédé de la demande française FR 1401510 au-delà de la simple localisation d'une balise, et l'applique à la fois à la voie montante et à la voie descendante. Plusieurs modes de réalisation applicables à la liaison montante et à la liaison descendante sont décrits, ainsi qu'un procédé de calibration des émissions et réceptions. L'ensemble des modes de réalisation partent du postulat de base que la position des différents acteurs du réseau (émetteur, satellites utilisés pour le relai et récepteur) est connue. Contrairement à la demande de brevet FR 1401510 qui nécessite exactement 4 satellites en visibilité commune de la balise et de la passerelle satellite, l'invention s'applique quel que soit le nombre de satellites en visibilité utilisés pour la transmission. Le gain de performance est relatif à ce nombre de satellite, et vaut approximativement $10.\log(N)$, où $N$ est le nombre de satellite en visibilité.

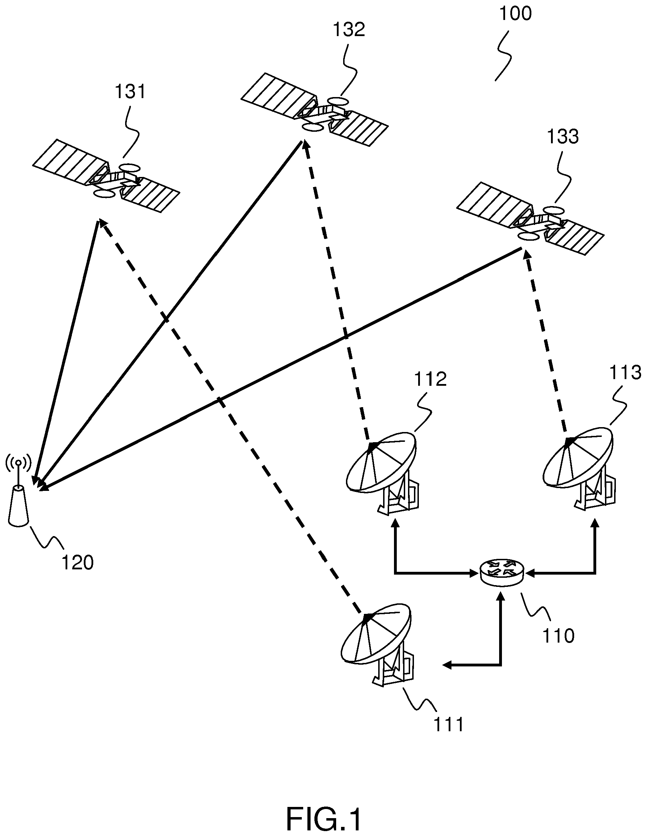

La figure 1 présente un réseau satellitaire 100 dans lequel l'émetteur dispose de moyens de séparation des signaux, et où l'invention est mise en oeuvre selon un premier mode de réalisation.

Le réseau satellitaire comprend un émetteur 110, transmettant un message à destination d'un récepteur 120. La transmission est relayée parallèlement par le biais de trois satellites 131, 132 et 133, en visibilité commune de l'émetteur et du récepteur.

L'émetteur comprend des moyens de séparation des signaux transmis à destination de chacun des satellites. Ces séparateurs de signaux permettent de séparer géométriquement, et de traiter distinctement les signaux transmis vers chacun des satellites. Dans la figure 1, ces moyens sont matérialisés sous la forme de trois antennes directives 111, 112 et 113, chacune des antennes étant pointée vers un satellite différent. D'autres implémentations sont possibles, comme par exemple l'utilisation d'une antenne active. Les antennes actives sont des antennes comprenant une multitude d'éléments rayonnants permettant de piloter le diagramme de rayonnement de l'antenne de manière à former des faisceaux dans une ou plusieurs directions données. Plus précisément, le même signal est émis sur chacun des éléments rayonnants, mais en appliquant au préalable un décalage de phase sur chacun d'eux. Ainsi seuls les satellites dans la direction où la différence de chemin optique du signal est égale à l'opposé des décalages de phase appliqués (ce qui correspond à une direction précise en azimuth et élévation) recevront le signal somme de manière cohérente, le signal somme étant nul dans les autres directions. Il est ainsi possible de différentier les directions de pointage des faisceaux, et de transmettre un signal différent à destination de chacun des faisceaux.

L'émetteur 110 connait sa propre position, ainsi que la position des satellites 131, 132 et 133 utilisés pour relayer la transmission. Il nécessite également la connaissance du vecteur vitesse des satellites, c'est-à-dire leurs vitesses de déplacement au sol associées à leurs directions de déplacement. Cette connaissance du vecteur vitesse n'est pas nécessaire lorsque les satellites sont des satellites géostationnaires, leur vitesse de déplacement étant alors considérée comme nulle. Les informations concernant les positions et déplacements des satellites sont transmises par les éphémérides, selon des méthodes bien connues de l'homme du métier.

L'émetteur connaît également la position du récepteur 120. Lorsque la topologie du réseau est fixe, alors cette position peut être programmée à l'avance. Lorsque la topologie du réseau est susceptible d'évoluer, cette position peut par exemple être acquise par le récepteur grâce à un positionnement GNSS (acronyme anglais pour Global Navigation Satellite System, ou système de positionnement par satellite), et transmise par un message faible débit lors de la phase d'entrée dans le réseau du terminal, puis régulièrement mise à jour. Pour cela, on pourra considérer que cet échange bas débit pour la position initiale (et ses éventuelles évolutions) pourra être fait sur un canal séparé en fréquence, en temps (avec des fenêtres de signalement périodiques par exemple), ou en code d'étalement. Dans un environnement CDMA, il peut également se faire avec une modulation faible débit bande étroite sans étalement par-dessus les modulations CDMA.

A partir de la connaissance de ces positions, l'émetteur est capable de calculer, pour chacun des satellites utilisés pour relayer la transmission, les décalages appliqués au signal lors de sa propagation.

Ces décalages sont de plusieurs types :

- décalage temporel, liés au temps de parcours relatif à la propagation entre l'émetteur et le satellite, puis à la propagation entre le satellite et le récepteur. En appelant $E$ le vecteur position de l'émetteur, et $R$ le vecteur position du récepteur, le temps de propagation (en secondes) est $\|R - E\|/c$, avec $c$ vitesse de la lumière dans le vide. Le calcul est à faire une première fois pour le décalage temporel entre l'émetteur et le satellite, puis une deuxième fois pour le décalage temporel entre le satellite et le récepteur, le décalage temporel total étant la somme de ces deux temps de parcours.

- décalage fréquentiel, ou décalage Doppler, associé au déplacement relatif du satellite par rapport à l'émetteur, et au déplacement relatif du satellite par rapport au récepteur. En utilisant les mêmes notations que ci-dessus, et en prenant $V_E$ le vecteur vitesse de l'émetteur, et $V_R$ le vecteur vitesse du récepteur, le décalage Doppler, exprimé en Hz, est donné par :

$$\frac{(V_E - V_R).(R-E)}{(c*\|R-E\| - V_E.(R-E)} * f,$$

avec $f$ la fréquence d'émission, l'opérateur point étant le produit scalaire. Le calcul est à faire une première fois pour le décalage fréquentiel entre l'émetteur et le satellite, puis une deuxième fois pour le décalage fréquentiel entre le satellite et le récepteur, le décalage fréquentiel total étant la somme de ces deux valeurs. La vitesse de déplacement au sol est généralement négligeable par rapport à la vitesse des satellites, qui est de l'ordre de 5km/sec pour une constellation MEO (acronyme anglais pour Médium Earth Orbit, ou orbite terrestre moyenne) et de 7 à 8km/sec pour une constellation LEO (acronyme anglais pour Low Earth Orbit, ou orbite terrestre basse). Ainsi, la valeur du décalage fréquentiel peut être calculée de manière assez précise en ne prenant en compte que du déplacement des satellites. La vitesse de déplacement de l'émetteur ou du récepteur peut néanmoins être prise en compte lorsqu'au moins l'un parmi eux se déplace rapidement, comme par exemple dans le cas d'une station embarquée sur un avion, ou lorsque les satellites envisagés sont des satellites géostationnaires, pour lesquels la vitesse de déplacement peut être considérée comme nulle,

- décalage en puissance, lié à la variation de puissance du signal du, sur chacun des segments sol-satellite et satellite-sol, aux pertes de bilan de liaison constituées des pertes d'espace libre, mais également aux gains d'antenne à l'émission et à la réception, les gains d'antenne dépendant de l'élévation et de l'azimut d'émission et de réception. Un décalage en puissance total, somme du décalage en puissance sur la voie montante et du décalage en puissance sur la voie descendante, peut alors être calculé,

- décalage en phase, lié à la fréquence centrale utilisée pour la transmission, et à la distance parcourue par le signal, le décalage en phase observé à la réception d'un signal émis depuis $E$ et reçu en $R$ étant le reste de la division euclidienne de $\|R - E\|/\lambda$, avec $\lambda$ la longueur d'onde du signal.

Pour chacun des satellites, l'émetteur est en mesure de calculer au moins l'un, voire la totalité des décalages mentionnés précédemment, et d'appliquer le décalage inverse (ou opposé) au signal transmis par le biais de ce satellite.

Le décalage inverse d'un décalage temporel consiste à avancer l'instant d'émission du signal d'une durée équivalente à celle calculée pour le satellite. Selon un mode de réalisation alternatif, il est possible de calculer un décalage de référence, par exemple un décalage moyen, entre les signaux transmis via les différents satellites, puis de calculer, pour chacun de ces satellites, un décalage relatif par rapport à ce décalage de référence, et décaler le signal transmis de l'inverse de ce décalage relatif.

Le décalage inverse d'un décalage fréquentiel consiste à décaler en fréquence le signal transmis d'une valeur opposée à celle calculée pour le satellite.

Le décalage inverse d'un décalage de puissance consiste à augmenter la puissance du signal émis d'un niveau de puissance égale à l'atténuation de puissance mesurée pour le satellite.

Une alternative au décalage de puissance indiqué ci-dessus consiste à définir un niveau de puissance cible, et à amplifier ou atténuer la puissance du signal émis par le biais de chacun des satellites de manière à ce que tous les signaux soient reçus avec le niveau de puissance prédéfini.

Le décalage inverse d'un décalage de phase consiste à appliquer un déphasage de phase sur le signal transmis inverse au déphasage de phase calculé.

Une alternative au décalage de phase indiqué ci-dessus consiste à définir une phase cible à la réception du signal émis par le biais de chacun des satellites, et à modifier la phase initiale des signaux transmis de manière à ce que tous les signaux soient reçus avec une phase sensiblement identique.

L'estimation précise du décalage de phase, en particulier lorsque les signaux sont transmis sur des fréquences porteuses élevées et sur des distances importantes, comme c'est le cas pour les liaisons satellites, est très sensible, une mauvaise estimation pouvant être source d'erreur.

Ainsi, l'émetteur 110 est en mesure de calculer au moins l'un, voire tous les décalages mentionnés précédemment, pour chacun des satellites 131, 132 et 133, et de calculer pour chacun de ces satellites, un signal pré-compensé.

Cette pré-compensation des signaux à l'émission permet de supprimer les interférences entre ceux-ci lorsqu'ils sont reçus par le récepteur. En effet, un écart temporel entre deux signaux reçus depuis des satellites différents peut créer de l'interférence entre symboles qui dégrade de manière importante le bilan de liaison. Un écart en phase entre deux signaux reçus, peut être constructif si le déphasage est proche d'un multiple de $\pi$, la puissance du signal équivalent reçu étant alors la somme des puissances de chacun des signaux reçus, mais également destructif s'il est proche de $N\frac{\pi}{2}$, $N$ étant un entier impair, la puissance du signal équivalent reçu étant alors la différence entre les puissances des signaux reçus. Un décalage de fréquence se manifeste sous la forme de variations du décalage de phase entre les signaux, les recombinaisons entre les signaux oscillant alors entre recombinaison constructive et destructive, le rythme de l'oscillation étant lié à l'écart de fréquence. Enfin, un décalage de puissance entre des signaux reçus, s'il est moins contraignant que les autres décalages mentionnés, doit être estimé et pris en compte lors de la recombinaison sous peine d'ajouter des bruits décorrélés mais de niveaux différents, le niveau le plus élevé devenant alors dominant.

Lors de l'émission, il est donc souhaitable de calculer et de pré-compenser au moins les décalages temporels, fréquentiels et de phase avant d'émettre les signaux vers l'ensemble des satellites.

Le récepteur 120 ne dispose pas nécessairement de moyens de séparation des voies.

Lorsqu'il n'en dispose pas, il reçoit un unique signal, somme des signaux relayés par chacun des satellites. De part les pré-compensations des décalages réalisées à l'émission, les signaux reçus ne présentent pas de déphasages temporels et fréquentiels. Ils sont synchronisés, en temps, fréquence, puissance et phase suivant les décalages estimés et pré-compensés. Ils se recombinent donc de manière optimale et constructive, les signaux relayés par les différents satellites se sommant de manière constructive sans générer d'interférences, permettant alors d'apporter au signal un gain fonction du nombre de satellites utilisés pour la transmission.

Dans le cas où il dispose de moyens de séparation des signaux, la réception est simplifiée en ce que, les signaux reçus étant synchronisés à la position du récepteur, il n'est pas nécessaire de mettre en oeuvre de traitements de synchronisation à la réception pour recombiner les signaux, une simple sommation étant suffisante.

L'invention est compatible de l'utilisation, par la station d'émission, de plusieurs passerelles satellites situées dans des zones géographiques éloignées, à condition que celles-ci soient synchronisées, et qu'elles puissent échanger des données par des moyens terrestres (ex : internet, liaison fibre optique, ...). Ce mode de réalisation permet d'augmenter le nombre de satellites en visibilité commune de la station d'émission et de la station de réception, et donc le gain de transmission.

Dans un mode de réalisation alternatif, dont la représentation est équivalente à celle de la figure 1, le signal est transmis par une station d'émission en utilisant une technique de transmission par étalement de spectre à séquence directe. L'étalement de spectre à séquence directe consiste à moduler le signal à transmettre par une séquence d'étalement connue de fréquence plus élevée. La séquence choisie s'apparente à un code qui, s'il est connu du récepteur, lui permet de distinguer les transmissions émises dans une même bande de fréquence.

Le récepteur connait sa position, la position de l'émetteur, ainsi que les positions de l'ensemble des satellites en visibilité commune de l'émetteur et du récepteur. Le cas échéant, il peut également connaître son vecteur vitesse, le vecteur vitesse de chacun des satellites, et/ou le vecteur vitesse de l'émetteur.

Dans ce mode de réalisation, l'émetteur 110 utilise une séquence d'étalement différente lors de la transmission du signal à chacun des satellites utilisés, mais ne réalise pas d'estimation et de pré-compensation des décalages.

Le récepteur 120, qui ne dispose pas d'antennes multiples ou d'antenne adaptative, sépare néanmoins les signaux reçus depuis chacun des satellites, à partir de la séquence utilisée lors de l'émission de ces signaux.

Une fois les signaux séparés, le récepteur est en mesure, connaissant les positions (et vecteurs vitesses) de tous les acteurs de la transmission, de calculer pour chacun des signaux les décalages temporels, fréquentiels, de phase et/ou de puissance auxquels il a été soumis lors de sa propagation, et de les compenser à l'inverse.

Il est ensuite possible de sommer tous ces signaux, qui se recombinent de façon constructive sans générer d'interférences, et d'exploiter le signal résultant.

Si ce mode de réalisation est plus couteux en termes de bande passante, du à l'utilisation d'une modulation à spectre étalée, il permet de gagner en puissance d'émission, l'étalement de spectre permettant de mettre en oeuvre des liaisons à des niveaux de rapport à bruit beaucoup plus bas. Il ne peut cependant pas être appliqué à la voie retour si le récepteur ne dispose pas de moyens de séparation des signaux qu'il envoie vers les différents satellites.

Dans le cas où l'émetteur se déplace à une vitesse importante, il peut pré-compenser le décalage Doppler généré par ce déplacement.

Selon un autre mode de réalisation, l'émetteur dispose de moyens de séparation des signaux transmis aux différents satellites en charge de la transmission du signal entre l'émetteur et le récepteur, mais ne connait pas nécessairement la position du récepteur. Il applique alors un décalage fréquentiel au signal transmis, ce décalage étant connu et différent en fonction du satellite en charge du relai du signal.

Le récepteur, qui ne dispose pas d'antennes multiples ou d'antenne adaptative, différentie néanmoins les signaux reçus depuis chacun des satellites, à partir de leur fréquence porteuse. L'émetteur et le récepteur disposent alors tous deux de moyens de séparation des signaux reçus depuis les différents satellites. Pour l'émetteur, ces moyens sont matériels (utilisation d'antennes directives), tandis que pour le récepteur, ces moyens sont soit logiciels (algorithmes de traitement du signal permettant de dissocier les signaux transmis selon leur fréquence porteuse), soit matériels (pluralité de chaînes radio parallèles positionnées à des fréquences porteuses différentes), et permettent de différencier les signaux reçus en fonction de leur fréquence porteuse.

Dans ce mode de réalisation, le récepteur dispose d'une ou plusieurs chaînes radios dont la bande passante totale est suffisamment importante pour lui permettre de recevoir l'ensemble des signaux transmis par chacun des satellites sur une fréquence porteuse différente. Il doit également être capable de ramener en bande de base et filtrer les signaux transmis sur chacune des fréquences porteuses, séparant ainsi les différents signaux reçus.

Une fois les signaux séparés, le récepteur peut, connaissant les positions (et vitesses) de tous les acteurs de la transmission, calculer pour chacun des signaux des décalages temporels, fréquentiels, de phase et/ou de puissance, et les compenser à l'inverse.

Il somme ensuite l'ensemble de ces signaux, qui se recombinent de façon constructive sans générer d'interférences.

Si ce mode de réalisation est plus coûteux en bande passante et augmente la complexité de la chaîne radio ou des traitements du récepteur, il permet de mettre en oeuvre la séparation des signaux au niveau du récepteur sans requérir l'usage d'antennes multiples ou d'antennes actives sur celui-ci.

Enfin, un autre mode de réalisation, destiné à permettre le fonctionnement à destination d'un récepteur dont la position, la vitesse et la direction de déplacement, ne sont pas connus ou connus que de manière grossière, consiste à réaliser, lors de l'émission, une répétition du signal, en appliquant à chaque répétition des décalages calculés à partir d'hypothèses de déplacement différentes.

Ainsi, dans le cas par exemple d'un avion se déplaçant à une vitesse élevée, plusieurs hypothèses de directions de déplacement différent sont envisagées. Un exemple consiste à prendre des hypothèses de direction de déplacement variant de 30° chacune et/ou des hypothèses de vitesse variant de 100km/h, et/ou toutes les combinatoires associées. Chacune de ces hypothèses débouche sur un calcul de décalage temporel, fréquentiel, de phase et/ou d'amplitude différent selon le satellite utilisé pour transmettre le signal. Le signal est donc transmis plusieurs fois à l'ensemble des satellites, chaque répétition étant réalisée à partir de signaux précompensés de l'inverse de décalages calculés à partir d'hypothèses différentes. A la réception, les répétitions du signal se sommeront de manière constructive ou de manière destructive, avec ou sans interférences, en fonction des hypothèses prises. Le récepteur pourra alors démoduler et traiter le signal correspondant à l'hypothèse la plus pertinente.

Ce mode de fonctionnement permet de gagner sur la qualité du signal reçu lorsque l'hypothèse prise est proche du déplacement réel du récepteur, et ce au dépend d'une diminution du débit. Cette diminution est directement liée au nombre d'hypothèses testées, et donc à la précision recherchée sur les décalages appliqués.

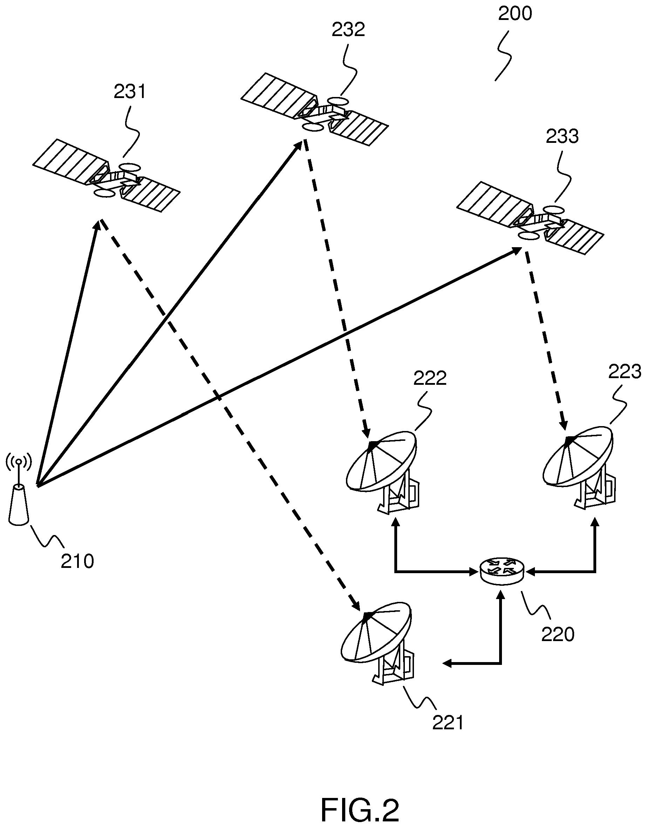

La figure 2 présente un réseau satellitaire 200 dans lequel l'invention est mise en oeuvre selon un deuxième mode de réalisation. Ce mode de réalisation se distingue du premier en ce que l'émetteur ne dispose pas de moyens de séparation des signaux, contrairement au récepteur.

Dans ce mode de réalisation, le réseau satellitaire 200 comprend un émetteur 210, transmettant un message à destination d'un récepteur 220. La transmission est réalisée par le biais de trois satellites 231, 232 et 233.

Le récepteur comprend des moyens de séparation des signaux transmis à destination de chacun des satellites. Dans la figure 2, ces moyens sont matérialisés sous la forme de trois antennes directives 221, 222 et 223, chacune des antennes étant pointée vers d'un satellite différent. D'autres implémentations sont possibles, comme par exemple l'utilisation d'une antenne active dont les faisceaux sont dirigés vers chacun des satellites.

Le récepteur 220 connait sa propre position (et vecteur vitesse), ainsi que la position (et le vecteur vitesse) des satellites 131, 132 et 133. Ces dernières informations lui sont transmises par les éphémérides, selon une méthode bien connue de l'homme du métier. Le récepteur connaît également la position (et vecteur vitesse) de l'émetteur 210.

La station d'émission émet le signal de façon non différenciée à destination de l'ensemble des satellites. Ceux-ci relayent en parallèle le signal vers le récepteur, qui utilise ses moyens de séparation pour les recevoir de manière différenciée.

A partir des positions de l'ensemble des acteurs de la transmission, et le cas échéant des vecteurs vitesse des satellites, le récepteur est alors en mesure de calculer, pour chacun des satellites, des décalages relatifs à la propagation du signal, et de compenser ces décalages. Tout comme pour l'exemple présenté en figure 1, ces décalages peuvent être des décalages temporels, fréquentiels, de phase et/ou puissance.

Lorsque le récepteur se déplace, il connait sa position, sa direction et sa vitesse, et peut alors également compenser l'effet Doppler généré par son déplacement. Il peut également compenser l'effet Doppler généré par le déplacement de l'émetteur lorsque le vecteur vitesse de celui-ci est connu.

Les signaux ayant été compensés, des décalages calculés sont ensuite sommés et exploités normalement par le récepteur.

La logique de reconstruction du signal au niveau du récepteur s'appuiera le plus souvent sur des techniques de corrélation cohérente et incohérente.

Dans un mode de réalisation préférentiel, la station de réception compense les décalages en temps, en fréquence, et en puissance. Après compensation de ces décalages, le signal est reçu à l'identique sur chacune des voies, sauf en ce qui concerne sa phase. En effet, les décalages de phase sont faciles à corriger au niveau du récepteur, pour peu que les sources y soient différenciées, et plus compliqués à corriger au niveau du système car ils demandent alors une très bonne maîtrise de la géométrie, typiquement quelques pourcents de la longueur d'onde (soit dans le domaine des fréquences utilisées traditionnellement pour les transmissions satellites, quelques centimètres), ou un processus de calibration menant à la même performance.

Dans le cas de ce mode de réalisation où la phase n'est pas compensée à partir de la géométrie du réseau, celle-ci peut être corrigée à partir des propriétés de corrélation entre les signaux. Ainsi, pour remettre deux signaux reçus sur des voies différentes en phase, il est possible de réaliser la multiplication complexe entre le premier signal et le conjugué du deuxième signal. Le résultat de la corrélation sur un domaine temporel quelconque est un nombre complexe dont la phase représente la différence de phase entre les deux signaux sur cet intervalle. En procédant avec des fenêtres de corrélations de taille cohérente avec l'erreur résiduelle possible en temps et en fréquence, on peut donc estimer la phase relative de manière périodique, sans avoir besoin de connaître le contenu des signaux. Une fois ces phases relatives connues, elles sont compensées et le signal somme cohérent est construit pour démodulation. Ce fonctionnement n'est rendu possible que parce que les signaux sont synchronisés en temps et en fréquence.

Le même processus de corrélation peut également servir à identifier la présence de signal, et à affiner les estimations de temps, de fréquence et de puissance, dans son approche dite « incohérente », c'est-à-dire où seul le module de la corrélation complexe est évalué. Ce module est maximal lorsque les signaux sont correctement alignés en temps et en fréquence, son amplitude étant le produit des puissances des deux satellites. Dit plus simplement, le résultat de la corrélation contient sur son argument la différence de phase, et sur son module l'information d'alignement général des signaux hors décalages de phases. Plusieurs hypothèses de décalages temps/fréquence peuvent alors être testées, pour ne conserver que celle qui a le maximum d'amplitude de corrélation, sans se préoccuper de la différence de phase dans cette première étape. Une fois le maximum trouvé, les différences de phase seront données par les arguments des corrélations. Ces méthodes par corrélations sont très largement à la base des technologies de communication et de navigation par satellite contemporaines, comme par exemple le GPS (acronyme anglais pour Global Positioning Satellite, ou géo-positionnement par satellite), et sont en ce sens très largement répandues dans les terminaux mobiles. En particulier, il existe des puces ASIC (acronyme anglais pour Application Specific Integrated Circuit, ou circuits intégrés à application spécifique), de très faible consommation et de très faible coût, adaptées à ces traitements (les capacités atteignent des milliers de corrélateurs). Une implémentation industrielle dans un récepteur miniaturisé pourrait donc d'une part s'appuyer sur cet héritage pour définir et développer une solution efficace et à moindre coût, et d'autre part être intégrée dans une puce unique qui se chargerait des corrélations nécessaires à la localisation, des corrélations nécessaires à la recombinaison de signaux, et même également des corrélations nécessaires à la démodulation des signaux de communication dans le cas de signaux en spectre étalé.

Selon un autre mode de réalisation, l'émetteur et le récepteur disposent tous deux de moyen de séparation des signaux relayés par chacun des satellites. Dans ce mode de réalisation, l'émetteur connaît sa position et la position de l'ensemble des satellites utilisés pour relayer en parallèle la transmission du signal. Il peut ainsi précompenser le signal des décalages liés à la propagation sur le lien montant. Le récepteur connaît également sa position, et la position de l'ensemble des satellites utilisés pour relayer la transmission du signal. Il réalise alors la postcompensation des signaux reçus des décalages liés à la propagation sur le lien descendant.

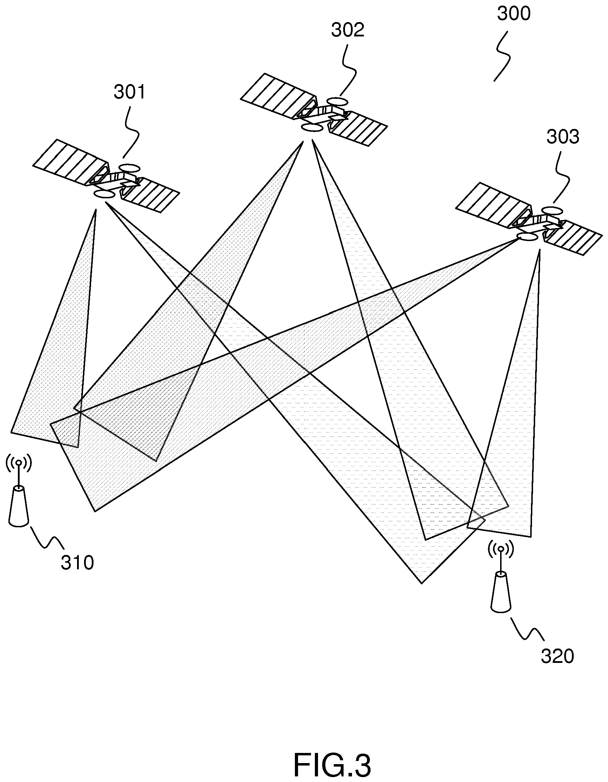

La figure 3 présente un réseau satellitaire 300 dans lequel chacun des satellites 301, 302 et 303 dispose de moyens de séparation des signaux, et où l'invention est mise en oeuvre selon un troisième mode de réalisation.

Dans ce mode de réalisation, les satellites utilisés pour relayer le signal entre l'émetteur 310 et le récepteur 320 connaissent leur position, ainsi que la position de l'émetteur et la position du récepteur. Lorsqu'il s'agit de satellites non géostationnaires, ils connaissent également leur vecteur vitesse. Ils disposent en outre de moyens de séparation entre la voie montante et la voie descendante. Dans la figure 3, ces moyens consistent en une antenne active présentant plusieurs faisceaux, l'émetteur et le récepteur étant dans des faisceaux différents. D'autres solutions sont possibles, comme par exemple l'utilisation de polarisations orthogonales. Il est également possible d'utiliser, au niveau des satellites, des antennes omnidirectionnelles (on entend par omnidirectionnelle le fait qu'elle couvre la terre avec un gain uniforme, l'antenne n'émettant de préférence pas dans les directions autres que vers la terre), les moyens de séparation entre la voie montante et la voie descendante étant les instants d'émission des signaux.

Dans ce mode de réalisation, chacun des satellites est en mesure - à partir de sa connaissance des positions de l'émetteur, du récepteur, et de propre position (et le cas échéant de son vecteur vitesse, ainsi que de ceux de l'émetteur et/ou du récepteur) - de post-compenser les signaux reçus depuis l'émetteur des décalages dus à la propagation entre l'émetteur et lui, et de pré-compenser le même signal avant sa retransmission des décalages à venir liés à la propagation entre lui et le récepteur.

Les signaux reçus par le récepteur depuis chacun des satellites 301, 302 et 303 sont alors synchronisés, et se recombinent de manière constructive.

Ce mode de réception permet d'alléger la contrainte antennaire sur l'émetteur ou le récepteur, qui peuvent alors se contenter d'antennes omnidirectionnelles.

Cependant, cette réduction de contrainte se traduit par une augmentation de la contrainte sur le satellite : antenne multi-faisceaux, nécessité de la connaissance de la position de l'émetteur et du récepteur, et réalisation de calculs de décalages à appliquer.

L'invention comprend également un procédé d'émission d'un signal par une station d'émission, le signal étant relayé par le biais d'une pluralité de satellites en parallèle, le signal transmis à chacun de ces satellites étant pré-compensé de manière à ce qu'il parvienne au récepteur depuis tous les satellites de manière synchronisée.

L'émetteur possède la connaissance de sa position, de la position du récepteur, ainsi que la position (et vecteur vitesse) de chacun des satellites utilisés pour la transmission du signal. Il dispose également de moyens lui permettant de pouvoir transmettre le signal indépendamment à chacun des satellites utilisés.

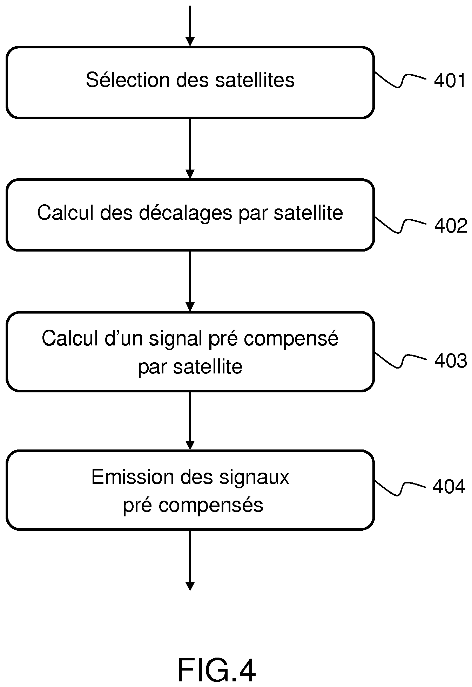

La figure 4 présente un diagramme des étapes réalisées par le procédé de communication selon l'invention lorsqu'il est exécuté par l'émetteur.

Ce procédé comprend une première étape 401 de sélection, parmi l'ensemble des satellites en visibilité commune de l'émetteur et du récepteur, d'au moins deux satellites utilisés pour relayer la transmission du signal. Cette étape permet de limiter ce nombre aux besoins requis pour la transmission, et d'adapter le nombre de satellites aux capacités des moyens de séparation des signaux de l'émetteur. Dans le cas où tous les satellites sont utilisés pour la transmission, cette étape s'apparente à la sélection de l'ensemble des satellites, et est transparente.

Le procédé comprend également une deuxième étape 402 de calcul, pour chacun des satellites sélectionnés lors de la première étape pour réaliser la transmission, d'au moins un décalage. Il s'agit ici de calculer au moins un décalage parmi un décalage temporel, un décalage fréquentiel, un décalage de phase et un décalage de puissance. Ces décalages sont liés à la position (et au déplacement) du satellite, ainsi qu'aux positions respectives de l'émetteur et du récepteur (et leurs déplacements).

Le procédé comprend en outre une troisième étape 403 de calcul d'un signal pré-compensé à transmettre par l'émetteur à destination du satellite, la précompensation étant l'application de décalages inverses aux décalages calculés lors de la deuxième étape.

Enfin, le procédé comprend une quatrième étape 404 d'émission, par la station d'émission, de l'ensemble des signaux calculés lors de la troisième étape. Chacun des signaux pré-compensés est transmis au satellite correspondant, qui le répète vers le récepteur. Ainsi, l'ensemble des signaux parviennent au récepteur de manière synchronisée, et se somment de façon constructive.

La première étape peut n'être réalisée que périodiquement, la période de réalisation de cette étape variant en fonction du temps nécessaire pour que les satellites en visibilité du récepteur et de l'émetteur varient de manière à influer sur les résultats de la première étape de sélection des satellites.

De même, l'émission de plusieurs signaux précompensés peut être réalisée en prenant comme entrée un même calcul de décalages, la période de réalisation de l'étape de calcul des décalages variant en fonction du temps nécessaire pour que le déplacement du satellite, de l'émetteur et du récepteur varie de manière à influer sur les résultats des calculs de décalages réalisés dans la deuxième étape.

L'invention comprend de plus un procédé de réception d'un signal dans une station de réception, la transmission de ce signal étant relayée par le biais d'une pluralité de satellites en parallèle, les signaux reçus depuis chacun de ces satellites étant post-compensés des décalages subis au cours de leur propagation afin de pouvoir être combinés de manière constructive.

Le récepteur possède la connaissance de sa position, de la position de l'émetteur, ainsi que la position (et vecteur vitesse) de chacun des satellites utilisés pour la transmission du signal. Il dispose également de moyens lui permettant de pouvoir recevoir le signal de manière différentiée depuis chacun des satellites utilisés.

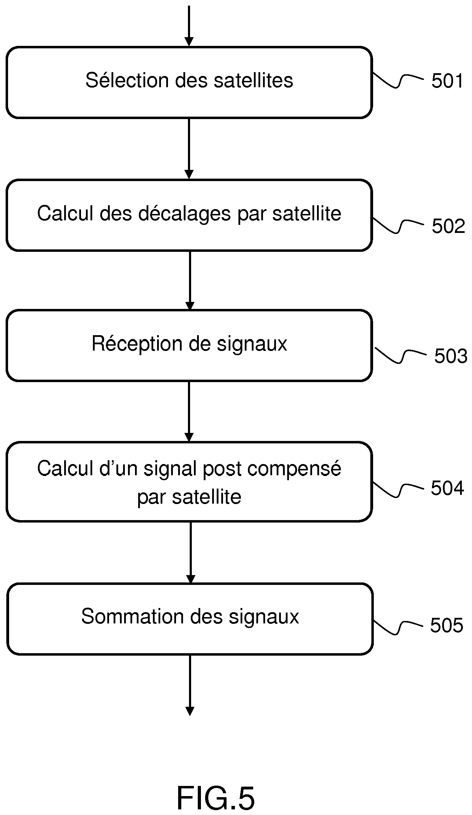

La figure 5 présente un diagramme des étapes réalisées par le procédé de communication selon l'invention lorsqu'il est exécuté par le récepteur.

Ce procédé comprend une première étape 501 de sélection, parmi l'ensemble des satellites en visibilité commune de l'émetteur et du récepteur, d'au moins deux satellites utilisés pour relayer la transmission du signal. Cette étape permet de limiter ce nombre aux besoins requis pour la transmission, et d'adapter le nombre de satellites aux capacités des moyens de séparation des signaux du récepteur. Dans le cas où tous les satellites sont utilisés pour la transmission, cette étape s'apparente à la sélection de l'ensemble des satellites, et est transparente.

Dans le cas où tous les satellites sont utilisés pour la transmission, cette étape s'apparente à la sélection de l'ensemble des satellites, et est transparente.

Le procédé comprend ensuite une deuxième étape 502 de calcul, pour chacun des satellites sélectionnés lors de la première étape pour réaliser la transmission, d'au moins un décalage. Il s'agit ici de calculer au moins un décalage parmi un décalage temporel, un décalage fréquentiel, un décalage de phase et un décalage de puissance. Ces décalages sont liés à la position (et vecteur vitesse) du satellite, et aux positions de l'émetteur et du récepteur.

Il comprend en outre une troisième étape 503 de réception du signal, de manière différentiée depuis chacun des satellites sélectionnés lors de la première étape.

Le procédé comprend également une quatrième étape 504 de calcul, pour chacun des satellites sélectionnés, d'un signal post-compensé en utilisant les décalages calculés lors de la troisième étape. Des décalages inverses à ces décalages sont alors appliqués au signal reçu lors de la troisième étape, et ce pour chacun des satellites sélectionnés pour la transmission.

Enfin, le procédé comprend une cinquième étape 505 de sommation des différents signaux post-compensés lors de la quatrième étape. Les signaux étant alors synchronisés, ils se somment de manière constructive, sans générer d'interférences.

De manière semblable au procédé d'émission, les étapes de sélection des satellites utilisés, et de calcul des décalages peuvent être réalisées à un rythme moins rapide que celui de la réception des messages.

L'invention comprend également un procédé de répétition par un satellite d'un signal, la transmission de ce signal étant réalisée par le biais d'une pluralité de satellites en parallèle, dont le satellite sur lequel le procédé est réalisé, les signaux reçus depuis chacun de ces satellites étant compensés afin d'arriver synchronisés au récepteur.

Le satellite possède la connaissance de sa position (et de son vecteur vitesse lorsqu'il s'agit d'un satellite non géostationnaire), ainsi que de la position et potentiellement du vecteur vitesse de l'émetteur et/ou du récepteur. Il dispose également de moyens lui permettant de recevoir le signal de manière différentiée entre l'émetteur ou le récepteur. Ces moyens pouvant être par exemple une antenne multi-faisceaux, ou simplement un multiplexage temporel des signaux transmis, des créneaux temporels distincts étant attribués à chacune des stations du réseau.

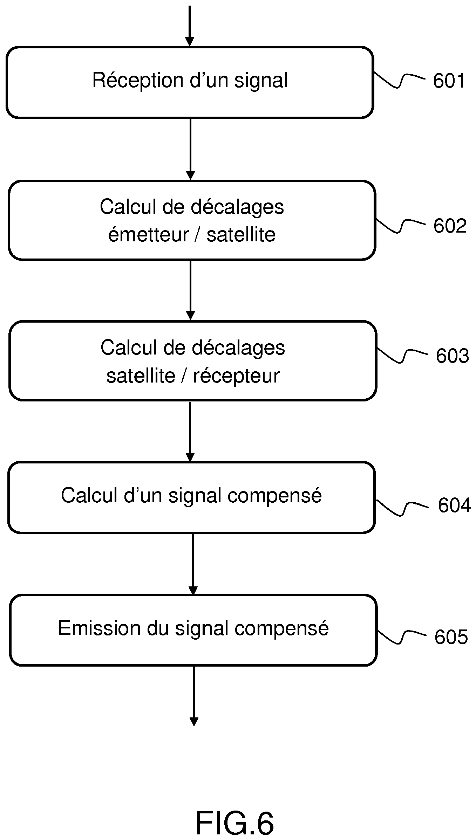

La figure 6 présente un diagramme des étapes réalisées par le procédé de communication selon l'invention lorsqu'il est exécuté par un satellite.

Ce procédé comprend une première étape 601 de réception, par le satellite, du signal émis par la station d'émission.

Il comprend ensuite une deuxième étape 602 de calcul, à partir de la position (et vitesse) du satellite, ainsi que de la position (et si disponible de la vitesse et direction) de l'émetteur, d'au moins un décalage lié à la propagation du signal entre l'émetteur et lui même. Il s'agit ici de calculer au moins un décalage parmi un décalage temporel, un décalage fréquentiel, un décalage de phase et un décalage de puissance.

Il comprend une troisième étape 603, similaire à l'étape 602 mais qui concerne cette fois-ci la propagation entre le satellite et le récepteur.

Le procédé comprend également une quatrième étape 604 de calcul d'un signal compensé, à partir du signal reçu, auquel sont appliqués des décalages inverses aux décalages calculés lors des deuxièmes et troisièmes étapes.

Enfin, le procédé comprend une cinquième étape 605 d'émission du signal ainsi compensé vers la station de réception.

Ainsi, le signal est reçu par la station de réception de manière synchronisée avec les signaux transmis par le biais des autres satellites en visibilité commune des deux stations, les signaux se recombinant alors de manière constructive.

Comme pour les autres procédés présentés, les étapes de calculs de décalages peuvent être réalisées à un rythme moins important que celui de la répétition des messages.

Les procédés représentés en figure 4, figure 5 et figure 6 sont destinés à être exécutés respectivement par un émetteur, par un récepteur et par un satellite. Ils peuvent être implémentés, par exemple, dans une machine de calcul reprogrammable, tel un processeur, un DSP (acronyme anglais pour Digital Signal Processor, ou processeur de signal numérique), ou un micro contrôleur. Ils peuvent également être implémentés dans une machine de calcul dédiée, tel qu'un ensemble de portes logiques comme un FPGA (acronyme anglais pour Field-Programmable Gâte Array, ou réseau de portes programmables) ou un ASIC, ou sous la forme de tout autre module matériel permettant l'exécution de calculs.

Les procédés décrits peuvent être adaptés pour mettre en oeuvre les modes de réalisation alternatifs décrits ci-dessus, comme par exemple l'utilisation d'une modulation à étalement de spectre par séquence directe, l'ajout d'un décalage fréquentiel dépendant du satellite opérant le relai du signal, la répétition du signal avec différentes hypothèses de déplacement, etc.

Dans les exemples présentés en figure 1, 2 et 3, le pré-requis est que la position du récepteur est connue de l'émetteur, ou que la position de l'émetteur est connue du récepteur, ou que les deux positions sont connues de chacun des satellites. Cependant, cette position peut n'être connue que de manière approximative, car variant au cours du temps, ou localisée de manière peu précise.

Les décalages calculés afin de pré-compenser ou post-compenser les signaux peuvent ainsi être entachés d'erreurs, la recombinaison des signaux n'étant alors plus optimale. En particulier, la recombinaison en phase des différents signaux est très sensible à ce type d'erreurs.

De manière à estimer plus précisément les décalages appliqués aux signaux, il est proposé de compléter les procédés présentés précédemment par un protocole spécifique de signalement des positions, réalisé préalablement à la transmission du signal en elle-même. Ce protocole peut être réalisé de différentes manières.

L'une d'elle consiste à utiliser une forme d'onde de type spectre étalé, permettant la meilleure robustesse aux collisions et une très bonne synchronisation en temps et en fréquence, pour transmettre par le biais de chacun des satellites pris successivement un message faible débit entre l'émetteur et le récepteur, le récepteur répondant au message par un message dédié faible débit, comprenant des informations sur les décalages temporels, fréquentiels, de phase et de puissance observés à la réception. Le message peut être retransmis périodiquement afin de limiter les dérives. Avantageusement, le débit (et donc le bilan de liaison nécessaire) de ce message sera fixé pour qu'il puisse être transmis par un seul satellite.

Dans un autre mode de réalisation, le message est transmis de l'émetteur vers le récepteur par chacun des satellites utilisés pour la transmission simultanément. Il dispose d'un moyen permettant au récepteur de différencier la provenance des messages, tel que l'émission sur une fréquence particulière, ou l'utilisation d'une modulation par étalement de spectre à séquence directe, avec une séquence propre au satellite utilisé. Le récepteur répond par le biais d'un message dédié comprenant des informations sur les décalages temporels, fréquentiels, de phase et/ou de puissance d'arrivée de chacun des signaux reçus. Ici aussi, avantageusement, les débits des messages sont fixés pour qu'ils ne soient transmis que par un seul satellite à l'aller et au retour.

Une autre méthode, applicable en particulier lorsque le récepteur est en charge de la compensation des signaux reçus sur chacun des satellites, consiste à transmettre un signal dédié, typiquement un signal de type porteuse pure, en parallèle du signal utile, afin de faciliter l'estimation des phases relatives. Lorsque la compensation des signaux est réalisée à l'émission, un message bas débit peut être transmis par le récepteur à l'émetteur contenant des informations sur la phase d'arrivée de la porteuse de calibration. Avantageusement, le débit de ces messages est fixé pour qu'ils ne soient transmis que par un seul satellite à l'aller et au retour.

Ces techniques de calibration permettent d'améliorer la compensation des signaux lorsque la maîtrise des positions et des déplacements des différents acteurs de la transmission n'est pas parfaite.

Le réseau satellite selon l'invention est une alternative aux réseaux satellites basés sur la formation de faisceaux connus de l'état de l'art. Il présente les avantages suivants :

- Il permet d'améliorer le bilan de liaison de manière directement proportionnelle au nombre de satellites utilisés pour la transmission. A titre d'exemple, l'utilisation de 10 satellites apporte un gain d'environ 10dB au bilan de liaison ;

- De part l'amélioration du bilan de liaison, il permet de diminuer la puissance d'émission de chacun des satellites ;

- Il ne nécessite pas de pré-requis sur le nombre de satellites utilisés : l'invention fonctionne à partir d'un satellite sans gain particulier, un gain supplémentaire étant apporté par chacun des satellites supplémentaires utilisés comme relais de la transmission ;

- Il est compatible d'un déploiement sur des satellites LEO, MEO et GEO (acronyme anglais pour Geostationnary Earth Orbit, ou orbite géostationnaire) : les contraintes de fort Doppler du déploiement sur des réseaux de satellites LEO sont supprimées car ces décalages sont compensés directement au niveau de l'émetteur ou du récepteur en fonction de la connaissance de la vitesse des satellites, et potentiellement de celle de l'émetteur et/ou du récepteur ;

- Il ne nécessite pas de mise en oeuvre de systèmes antennaires complexes au niveau des satellites, une antenne de type omnidirectionnelle (ou plus exactement dirigée vers la terre, qu'elle couvre en un faisceau unique de gain uniforme) ou limitée à quelques spots permettant de mettre en oeuvre l'invention, réduisant ainsi la charge utile sur le satellite ;

- La simplification du système antennaire à bord du satellite la rend compatible d'un déploiement sur un réseau de satellites MEO ;

- L'invention est robuste au brouillage, au masquage et aux pannes, de par la diversité apportée par l'utilisation de plusieurs satellites.

A titre d'exemple, un gain de 10dB pourrait être obtenu par l'invention lorsqu'elle est déployée sur un réseau de 35 satellites MEO. Le même gain pourrait être obtenu lorsque l'invention est déployée sur un réseau de 500 satellites LEO.

L'invention nécessite l'utilisation de moyens de séparation des signaux, et de traitement parallèles de ceux-ci. L'usage d'antennes actives à formation de faisceaux numériques, permettant la détection et la formation simple de faisceaux, sur les passerelles satellite ou les récepteurs satellites, est bien connu de l'homme du métier. A cet effet, l'invention est particulièrement adaptée au cas de déploiement d'un réseau selon une topologie de réseau en étoile (en anglais STAR network), dans laquelle l'ensemble des transmissions se fait par le biais d'un équipement central du réseau, de type concentrateur, commutateur ou routeur. Cet équipement est également généralement utilisé comme passerelle vers les réseaux extérieurs.

L'invention s'adapte très simplement à une telle topologie de réseau, car elle ne nécessite, pour être mise en oeuvre selon l'un des modes de réalisation, que de doter l'équipement central de moyens de séparation des transmissions vers et à destination de chacun des satellites. Ces moyens de séparation sont généralement présents au niveau de l'équipement central, l'intérêt de la topologie en étoile étant de doter cet équipement d'antennes très directives afin d'améliorer les bilans de liaisons de bout en bout pour pouvoir utiliser des schémas de modulation et de codage spectralement très efficaces, et échanger des données à haut débit.

La gestion des accès entre les différents utilisateurs au sein du réseau satellite selon l'invention se fait ensuite selon des méthodes connues de l'homme du métier, comme le multiplexage temporel (ou TDMA pour l'acronyme anglais Time Division Multiple Accès), le multiplexage fréquentiel (ou FDMA pour l'acronyme anglais Frequency Division Multiple Accès), le multiplexage par code (ou CDMA pour l'acronyme anglais Code Division Multiple Accès), ou par des accès en contention.

L'invention peut également être utilisée en complément d'un déploiement par faisceaux, permettant alors d'augmenter la taille des spots satellitaires, réduisant ainsi les contraintes portant sur l'antenne embarquée à bord du satellite.

## Revendications

1. Réseau de communications par satellite (100, 200, 300), comprenant au moins une station d'émission (110), au moins une station de réception (120), et une pluralité de satellites (131, 132, 133), le réseau étant **caractérisé en ce qu'**un signal transmis entre la station d'émission et la station de réception suit une pluralité de chemins différents sur chacun desquels il est relayé par un satellite en visibilité commune de la station d'émission et de la station de réception, et **en ce que** pour chaque chemin :

  - un équipement (110, 320, 301, 302, 303) connait la position de la station d'émission et du satellite relayant le signal, dispose de moyens de séparation des signaux, et est configuré pour calculer au moins un décalage temporel, un décalage fréquentiel et un décalage en phase apportés par la propagation du signal sur la partie du chemin comprise entre l'émetteur et le satellite relayant le signal à partir de leurs positions, puis pour appliquer au signal transmis sur le chemin au moins un décalage inverse desdits décalage temporel, décalage fréquentiel et décalage en phase calculés, et
  - un équipement (110, 320, 301, 302, 303) connait la position de la station de réception et du satellite relayant le signal, dispose de moyens de séparation des signaux et est configuré pour calculer au moins un décalage temporel, un décalage fréquentiel et un décalage en phase apportés par la propagation du signal sur la partie du chemin comprise entre le satellite relayant le signal et le récepteur à partir de leurs positions, puis pour appliquer au signal transmis sur le chemin au moins un décalage inverse desdits décalage temporel, décalage fréquentiel et décalage en phase calculés.

2. Réseau de communications par satellite selon la revendication 1, dans lequel le calcul du ou des décalages est réalisé en outre à partir d'au moins un parmi un vecteur vitesse de la station d'émission, un vecteur vitesse de la station de réception, et un vecteur vitesse du satellite par lequel le signal est relayé.

3. Réseau de communications par satellite selon l'une des revendications précédentes, dans lequel le calcul du ou des décalages comprend en outre le calcul d'un décalage en puissance.

4. Réseau de communications par satellite selon l'une des revendications précédentes, dans lequel les moyens de séparation des signaux comprennent une antenne active.

5. Réseau de communications par satellite selon l'une des revendications 1 à 3, dans lequel les moyens de séparation des signaux comprennent une pluralité d'antennes directives (111, 112, 113).

6. Réseau de communications par satellite selon l'une des revendications 1 à 3, dans lequel le signal transmis est modulé selon une technique d'étalement de spectre par séquence directe, la station d'émission (110) étant configurée pour séparer (111, 112, 113) les signaux relayés par les satellites (121, 122, 123) en modulant chacun par une séquence distincte, la station de réception (120) étant configurée pour séparer les signaux relayés par chacun des satellites à partir de la séquence utilisée à l'émission.

7. Réseau de communications par satellite selon l'une des revendications 1 à 3, dans lequel une fréquence porteuse du signal transmis par la station d'émission est adaptée en fonction du satellite relayant la transmission, la station d'émission (110) étant configurée pour séparer (111, 112, 113) les signaux relayés par les satellites (121, 122, 123) en appliquant à chacun un décalage fréquentiel distinct, la station de réception étant configurée pour séparer les signaux relayés par chacun des satellites à partir de leur fréquence porteuse.

8. Réseau de communications par satellite selon l'une des revendications précédentes, dans lequel la station d'émission (110) est configurée pour séparer (111, 112, 113) les signaux relayés par les satellites (121, 122, 123) et pour répéter le signal transmis, les décalages inverses appliqués aux signaux pour chacune des répétitions étant calculés à partir d'hypothèses différentes d'une direction de déplacement du récepteur.

9. Réseau de communications par satellite selon l'une des revendications précédentes, dans lequel la station d'émission est configurée pour émettre un signal dédié à une calibration des décalages inverses appliqués aux signaux.

10. Réseau de communications par satellite selon l'une des revendications précédentes, dans lequel la station d'émission et la station de réception sont en outre configurées pour échanger un message de synchronisation successivement par chacun des satellites utilisés pour relayer la transmission avant de transmettre le signal.

11. Réseau de communications par satellite selon l'une des revendications précédentes, dans lequel la station d'émission et la station de réception sont en outre configurées pour échanger un message de synchronisation simultanément par chacun des satellites utilisés pour relayer la transmission avant de transmettre le signal.

12. Procédé d'émission d'un signal depuis une station d'émission vers une station de réception dans un réseau de communications par satellite, ledit réseau comprenant une pluralité de satellites en visibilité commune de la station d'émission et de la station de réception, ladite station d'émission (110) connaissant sa position, la position de la station de réception et la position des satellites en visibilité commune, et étant configurée pour séparer les signaux transmis vers les satellites en visibilité commune, le procédé étant **caractérisé en ce qu'**il comprend les étapes de :

  • sélection (401), parmi les satellites en visibilité commune, d'une pluralité de satellites utilisés pour relayer la transmission du signal,
  • calcul (402), pour chacun des satellites sélectionnés, d'au moins un décalage temporel, un décalage fréquentiel et un décalage en phase liés à la propagation du signal à partir de la position de la station d'émission, de la position de la station de réception, et de la position dudit satellite,
  • calcul (403), pour chacun des satellites sélectionnés, d'un signal pré-compensé en appliquant des décalages inverses desdits décalages calculés, et
  • émission (404), vers chacun des satellites sélectionnés, du signal pré-compensé qui lui est associé.

13. Procédé de réception d'un signal transmis entre une station d'émission et une station de réception dans un réseau de communications par satellite, ledit réseau comprenant une pluralité de satellites en visibilité commune de la station d'émission et de la station de réception, ladite station de réception (210) connaissant sa position, la position de la station d'émission et la position des satellites en visibilité commune, et étant configurée pour séparer les signaux reçus depuis les satellites du réseau, le signal étant relayé par une pluralité de satellites parmi les satellites en visibilité commune, le procédé étant **caractérisé en ce qu'**il comprend les étapes de :

  • sélection (501), parmi les satellites en visibilité commune, d'une pluralité de satellites utilisés pour relayer la transmission du signal,
  • calcul (502), pour chacun des satellites sélectionnés, d'au moins un décalage temporel, un décalage fréquentiel et un décalage en phase liés à la propagation du signal à partir de la position de la station d'émission, de la position de la station de réception, et de la position dudit satellite,
  • réception (503) du signal depuis chacun des satellites sélectionnés,
  • calcul (504), pour chacun des satellites sélectionnés, d'un signal compensé en appliquant au signal reçu des décalages inverses desdits décalages calculés, et
  • sommation (505) de l'ensemble des signaux compensés.

14. Procédé de répétition d'un signal dans un satellite lors de la transmission d'un signal entre une station d'émission et une station de réception dans un réseau de communications par satellite, ledit satellite étant un parmi une pluralité de satellites du réseau en visibilité commune de la station d'émission et de la station de réception, ledit satellite connaissant sa position, la position de la station d'émission, et la position de la station de réception, et étant configuré pour séparer les signaux reçus depuis l'émetteur des signaux transmis vers le récepteur, le procédé étant **caractérisé en ce qu'**il comprend les étapes de :

  • réception (601) par le satellite du signal transmis depuis la station d'émission,
  • calcul (602) d'au moins un premier décalage temporel, un premier décalage fréquentiel et un premier décalage en phase liés à la propagation du signal entre l'émetteur et le satellite à partir de la position du satellite, et de la position de l'émetteur,
  • calcul (603) d'au moins un deuxième décalage temporel, un deuxième décalage fréquentiel et un deuxième décalage en phase liés à la propagation du signal entre le satellite et le récepteur à partir de la position du satellite et de la position du récepteur,
  • calcul (604) d'un signal compensé, en appliquant au signal reçu des décalages inverses auxdits premiers et deuxièmes décalages calculés, et
  • émission (605) du signal compensé vers la station de réception.

15. Station d'émission configurée pour mettre en oeuvre un procédé d'émission d'un signal selon la revendication 12.

16. Station de réception configurée pour mettre en oeuvre un procédé de réception d'un signal selon la revendication 13.

17. Satellite configuré pour mettre en oeuvre un procédé de répétition d'un signal selon la revendication 14.

**Patentansprüche**

1. Satelliten-Kommunikationsnetzwerk (100, 200, 300), welches mindestens eine Sendestation (110), mindestens eine Empfangsstation (120) und eine Vielzahl von Satelliten (131, 132, 133) beinhaltet, wobei das Netzwerk **dadurch gekennzeichnet ist, dass** ein zwischen der Sendestation und der Empfangsstation übertragenes Signal einer Vielzahl unterschiedlicher Wege folgt, wobei es auf jedem dieser Wege über einen gleichermaßen für die Sende- und die Empfangsstation sichtbaren Satelliten weitergeleitet wird, und dadurch, dass für jeden Weg:

> - eine Ausrüstung (110, 320, 301, 302, 303) die Position der Sendestation und des das Signal weiterleitenden Satelliten kennt, über Signaltrennmittel verfügt und konfiguriert ist, um mindestens eine Zeitverschiebung, eine Frequenzverschiebung und eine Phasenverschiebung zu berechnen, welche durch die Fortpflanzung des Signals auf demjenigen Teil des Weges verursacht wird, der zwischen dem Sender und dem das Signal weiterleitenden Satelliten anhand deren jeweiliger Position liegt, und um anschließend auf das auf dem Weg übertragene Signal mindestens eine Umkehrverschiebung der berechneten Zeitverschiebung, Frequenzverschiebung und Phasenverschiebung anzuwenden, und
> - eine Ausrüstung (110, 320, 301, 302, 303) die Position der Empfangsstation und des das Signal weiterleitenden Satelliten kennt, über Signaltrennmittel verfügt, und konfiguriert ist, um mindestens eine Zeitverschiebung, eine Frequenzverschiebung und eine Phasenverschiebung zu berechnen, welche durch die Fortpflanzung des Signals auf demjenigen Teil des Weges verursacht wird, der zwischen dem das Signal weiterleitenden Satelliten und dem Empfänger anhand deren jeweiliger Position liegt, und um anschließend auf das auf dem Weg übertragene Signal mindestens eine Umkehrverschiebung der berechneten Zeitverschiebung, Frequenzverschiebung und Phasenverschiebung anzuwenden.

2. Satelliten-Kommunikationsnetzwerk nach Anspruch 1, bei welchem die Berechnung der Verschiebung oder Verschiebungen zudem anhand mindestens einem von einem Geschwindigkeitsvektor der Sendestation, einem Geschwindigkeitsvektor der Empfangsstation und einem Geschwindigkeitsvektor des Satelliten, über den das Signal weitergeleitet wird, erfolgt.

3. Satelliten-Kommunikationsnetzwerk nach einem der vorhergehenden Ansprüche, bei welchem die Berechnung der Verschiebung oder Verschiebungen zudem die Berechnung einer Leistungsverschiebung beinhaltet.

4. Satelliten-Kommunikationsnetzwerk nach einem der vorhergehenden Ansprüche, bei welchem die Signaltrennmittel eine aktive Antenne beinhalten.

5. Satelliten-Kommunikationsnetzwerk nach einem der Ansprüche 1 bis 3, bei welchem die Signaltrennmittel eine Vielzahl von Richtantennen (111, 112, 113) beinhalten.

6. Satelliten-Kommunikationsnetzwerk nach einem der Ansprüche 1 bis 3, bei welchem das übertragene Signal anhand einer Technik der Spektrum-Spreizung in direkter Sequenz moduliert wird, wobei die Sendestation (110) konfiguriert ist, um die von den Satelliten (121, 122, 123) weitergeleiteten Signale zu trennen (111, 112, 113), indem jedes durch eine unterschiedliche Sequenz moduliert wird, wobei die Empfangsstation (120) konfiguriert ist, die durch jeden der Satelliten weitergeleiteten Signale anhand der beim Senden verwendeten Sequenz zu trennen.

7. Satelliten-Kommunikationsnetzwerk nach einem der Ansprüche 1 bis 3, bei welchem eine durch die Sendestation übertragene Trägerfrequenz angesichts des die Übertragung weiterleitenden Satelliten angepasst ist, wobei die Sendestation (110) konfiguriert ist, um die von den Satelliten (121, 122, 123) weitergeleiteten Signale zu trennen (111, 112, 113), indem sie auf jedes eine unterschiedliche Frequenzverschiebung anwendet, wobei die Empfangsstation konfiguriert ist, um die durch jeden der Satelliten weitergeleiteten Signale anhand ihrer Trägerfrequenz zu trennen.

8. Satelliten-Kommunikationsnetzwerk nach einem der vorhergehenden Ansprüche, bei welchem die Sendestation (110) konfiguriert ist, um die von den Satelliten (121, 122, 123) weitergeleiteten Signale zu trennen (111, 112, 113) und um das übertragene Signal zu wiederholen, wobei die auf die Signale bei jeder der Wiederholungen angewandten Umkehrverschiebungen anhand von verschiedenen Hypothesen einer Bewegungsrichtung des Empfängers berechnet werden.

9. Satelliten-Kommunikationsnetzwerk nach einem der vorhergehenden Ansprüche, bei welchem die Sendestation konfiguriert ist, um ein für eine Kalibrierung der Umkehrverschiebungen, welche auf die Signale angewendet werden, bestimmtes Signal zu senden.

10. Satelliten-Kommunikationsnetzwerk nach einem der vorhergehenden Ansprüche, bei welchem die Sendestation und die Empfangsstation zudem konfiguriert sind, um eine Synchronisierungsmeldung nacheinander über jeden der zur Weiterleitung der Übertragung verwendeten Satelliten auszutauschen, bevor das Signal übertragen wird.

11. Satelliten-Kommunikationsnetzwerk nach einem der vorhergehenden Ansprüche, bei welchem die Sendestation und die Empfangsstation zudem konfiguriert sind, um eine Synchronisierungsmeldung gleichzeitig über jeden der zur Weiterleitung der Übertragung verwendeten Satelliten auszutauschen, bevor das Signal übertragen wird.

12. Verfahren zum Senden eines Signals von einer Sendestation an eine Empfangsstation in einem Satelliten-Kommunikationsnetzwerk, wobei das Netzwerk eine Vielzahl von gleichermaßen für die Sende- und die Empfangsstation sichtbaren Satelliten beinhaltet, wobei die Sendestation (110) ihre Position, die Position der Empfangsstation und die Position der gleichermaßen sichtbaren Satelliten kennt und konfiguriert ist, um die an die gleichermaßen sichtbaren Satelliten übertragenen Signale zu trennen, wobei das Verfahren folgende Schritte beinhaltet:

  • Auswahl (401), aus den gleichermaßen sichtbaren Satelliten, einer Vielzahl von Satelliten, welche zur Weiterleitung der Übertragung des Signals verwendet werden,
  • Berechnen (402), für jeden der ausgewählten Satelliten, von mindestens einer Zeitverschiebung, einer Frequenzverschiebung und einer Phasenverschiebung in Zusammenhang mit der Fortpflanzung des Signals anhand der Position der Sendestation, der Position der Empfangsstation und der Position des Satelliten,
  • Berechnen (403), für jeden der ausgewählten Satelliten, eines präkompensierten Signals durch Anwendung von Umkehrverschiebungen der berechneten Verschiebungen, und
  • Senden (404), an jeden der ausgewählten Satelliten, des präkompensierten Signals, das mit ihm assoziiert ist.

13. Verfahren zum Empfangen eines zwischen einer Sendestation und einer Empfangsstation in einem Satelliten-Kommunikationsnetzwerk übertragenen Signals, wobei das Netzwerk eine Vielzahl von gleichermaßen für die Sende- und die Empfangsstation sichtbaren Satelliten beinhaltet, wobei die Empfangsstation (210) ihre Position, die Position der Sendestation und die Position der gleichermaßen sichtbaren Satelliten kennt und konfiguriert ist, um die von den Satelliten des Netzwerks empfangenen Signale zu trennen, wobei das Signal durch eine Vielzahl von Satelliten unter den gleichermaßen sichtbaren Satelliten weitergeleitet wird, wobei das Verfahren folgende Schritte beinhaltet:

  • Auswahl (501), aus den gleichermaßen sichtbaren Satelliten, einer Vielzahl von Satelliten, welche zur Weiterleitung der Übertragung des Signals verwendet werden,
  • Berechnen (502), für jeden der ausgewählten Satelliten, von mindestens einer Zeitverschiebung, einer Frequenzverschiebung und einer Phasenverschiebung in Zusammenhang mit der Fortpflanzung des Signals anhand der Position der Sendestation, der Position der Empfangsstation und der Position des Satelliten,
  • Empfangen (503) des Signals von einem jeden der ausgewählten Satelliten,
  • Berechnen (504), für jeden der ausgewählten Satelliten, eines kompensierten Signals durch Anwendung, auf das empfangene Signal, der Umkehrverschiebungen der berechneten Verschiebungen, und
  • Summieren (505) sämtlicher kompensierter Signale.

14. Verfahren zum Wiederholen eines Signals in einem Satelliten bei der Übertragung eines Signals zwischen einer Sendestation und einer Empfangsstation in einem Satelliten-Kommunikationsnetzwerk, wobei der Satellit ein Satellit aus einer Vielzahl von gleichermaßen für die Sende- und die Empfangsstation sichtbaren Satelliten des Netzwerks ist, wobei der Satellit seine Position, die Position der Sendestation und die Position der Empfangsstation kennt und konfiguriert ist, um die vom Sender der Signale an den Empfänger übertragenen Signale zu trennen, wobei das Verfahren folgende Schritte beinhaltet:

  • Empfangen (601) des von der Sendestation übertragenen Signals durch den Satelliten,
  • Berechnen (602) von mindestens einer ersten Zeitverschiebung, einer ersten Frequenzverschiebung und einer ersten Phasenverschiebung in Zusammenhang mit der Fortpflanzung des Signals zwischen dem Sender und dem Satelliten anhand der Position des Satelliten und der Position des Senders,
  • Berechnen (603) von mindestens einer zweiten Zeitverschiebung, einer zweiten Frequenzverschiebung und einer zweiten Phasenverschiebung in Zusammenhang mit der Fortpflanzung des Signals zwischen dem Satelliten und dem Empfänger anhand der Position des Satelliten und der Position des Empfängers,

• Berechnen (604) eines kompensierten Signals, durch Anwendung, auf das empfangene Signal, der Umkehrverschiebungen der ersten und der zweiten berechneten Verschiebungen, und
• Senden (605) des kompensierten Signals an die Empfangsstation.

15. Sendestation, welche konfiguriert ist, um das Sendeverfahren eines Signals nach Anspruch 12 umzusetzen.

16. Empfangsstation, welche konfiguriert ist, um das Empfangsverfahren eines Signals nach Anspruch 13 umzusetzen.

17. Satellit, welcher konfiguriert ist, um das Wiederholungsverfahren eines Signals nach Anspruch 14 umzusetzen.


**Claims**

1. A satellite communications network (100, 200, 300), comprising at least one sending station (110), at least one receiving station (120), and a plurality of satellites (131, 132, 133), the network being **characterized in that** a signal transmitted between the sending station and the receiving station follows a plurality of different paths on each of which it is relayed by a satellite visible in common of the sending station and of the receiving station, and **in that** for each path:

   - an item of equipment (110, 320, 301, 302, 303) knows the position of the sending station and of the satellite relaying the signal, has means for separating the signals, and is configured to compute at least one time shift, one frequency shift and one shift in phase introduced by the propagation of the signal on the part of the path comprised between the sender and the satellite relaying the signal on the basis of their positions, then to apply to the signal transmitted on the path at least one shift which is inverse to said computed time shift, frequency shift and shift in phase, and
   - an item of equipment (110, 320, 301, 302, 303) knows the position of the receiving station and of the satellite relaying the signal, has means for separating the signals, and is configured to compute at least one time shift, one frequency shift and one shift in phase introduced by the propagation of the signal on the part of the path comprised between the satellite relaying the signal and the receiver on the basis of their positions, then to apply to the signal transmitted on the path at least one shift which is inverse to said computed time shift, frequency shift and shift in phase.

2. The satellite communications network according to claim 1, wherein the computation of the shift or shifts is carried out further on the basis of at least one from among a velocity vector of the sending station, a velocity vector of the receiving station, and a velocity vector of the satellite by which the signal is relayed.

3. The satellite communications network according to any preceding claim, wherein the computation of the shift or shifts further comprises the computation of a shift in power.

4. The satellite communications network according to any preceding claim, wherein the means for separating the signals comprise an active antenna.

5. The satellite communications network according to any of claims 1 to 3, wherein the means for separating the signals comprise a plurality of directional antennas (111, 112, 113).

6. The satellite communications network according to any of claims 1 to 3, wherein the signal transmitted is modulated according to a direct-sequence spread spectrum technique, the sending station (110) being configured to separate (111, 112, 113) the signals relayed by the satellites (121, 122, 123) by modulating each thereof by a distinct sequence, the receiving station (120) being configured to separate the signals relayed by each of the satellites on the basis of the sequence used upon sending.

7. The satellite communications network according to any of claims 1 to 3, wherein a carrier frequency of the signal transmitted by the sending station is adapted as a function of the satellite relaying the transmission, the sending station (110) being configured to separate (111, 112, 113) the signals relayed by the satellites (121, 122, 123) by applying a distinct frequency shift to each thereof, the receiving station being configured to separate the signals relayed by each of the satellites on the basis of their carrier frequency.

8. The satellite communications network according to any preceding claim, wherein the sending station (110) is configured to separate (111, 112, 113) the signals relayed by the satellites (121, 122, 123) and to repeat the signal transmitted, the inverse shifts applied to the signals for each of the repetitions being computed on the basis of different assumptions of a direction of movement of the receiver.

9. The satellite communications network according to any preceding claim, wherein the sending station is configured to send a signal dedicated to a calibration of the inverse shifts applied to the signals.

10. The satellite communications network according to any preceding claim, wherein the sending station and the receiving station are furthermore configured to exchange a synchronization message successively by each of the satellites used to relay the transmission before transmitting the signal.

11. The satellite communications network according to any preceding claim, wherein the sending station and the receiving station are furthermore configured to exchange a synchronization message simultaneously by each of the satellites used to relay the transmission before transmitting the signal.

12. A method for sending a signal from a sending station to a receiving station in a satellite communications network, said network comprising a plurality of satellites visible in common of the sending station and of the receiving station, said sending station (110) knowing its position, the position of the receiving station and the position of the satellites visible in common, and being configured to separate the signals transmitted to the satellites visible in common, the method being **characterized in that** it comprises the steps of:

   • selection (401), from among the satellites visible in common, of a plurality of satellites used to relay the transmission of the signal,
   • computation (402), for each of the satellites selected, of at least one time shift, one frequency shift and one shift in phase related to the propagation of the signal on the basis of the position of the sending station, of the position of the receiving station, and of the position of said satellite,
   • computation (403), for each of the satellites selected, of a pre-compensated signal by applying shifts which are inverse to said computed shifts, and
   • sending (404), to each of the satellites selected, the pre-compensated signal associated therewith.

13. A method for receiving a signal transmitted between a sending station and a receiving station in a satellite communications network, said network comprising a plurality of satellites visible in common of the sending station and of the receiving station, said receiving station (210) knowing its position, the position of the sending station and the position of the satellites visible in common, and being configured to separate the signals received from the network satellites, the signal being relayed by a plurality of satellites among the satellites visible in common, the method being **characterized in that** it comprises the steps of:

   • selection (501), from among the satellites visible in common, of a plurality of satellites used to relay the transmission of the signal,
   • computation (502), for each of the satellites selected, of at least one time shift, one frequency shift and one shift in phase related to the propagation of the signal on the basis of the position of the sending station, of the position of the receiving station, and of the position of said satellite,
   • reception (503) of the signal from each of the satellites selected,
   • computation (504), for each of the satellites selected, of a compensated signal by applying to the signal received shifts which are inverse to said computed shifts, and
   • summation (505) of all the compensated signals.

14. A method for repeating a signal in a satellite during the transmission of a signal between a sending station and a receiving station in a satellite communications network, said satellite being one from among a plurality of satellites of the network visible in common of the sending station and of the receiving station, said satellite knowing its position, the position of the sending station, and the position of the receiving station, and being configured to separate the signals received from the sender of the signals transmitted to the receiver, the method being **characterized in that** it comprises the steps of:

   • reception (601) by the satellite of the signal transmitted from the sending station,
   • computation (602) of at least one first time shift, one first frequency shift and one first shift in phase related to the propagation of the signal between the sender and the satellite on the basis of the position of the satellite and the position of the sender,
   • computation (603) of at least one second time shift, one second frequency shift and one second shift in phase related to the propagation of the signal between the satellite and the receiver on the basis of the position of the satellite and the position of the receiver,
   • computation (604) of a compensated signal by applying to the signal received shifts which are inverse to said first and second computed shifts, and
   • sending (605) the compensated signal to the receiving station.

15. A sending station configured to implement a method for sending a signal according to claim 12.

35      **EP 3 185 032 B1**      36

**16.** A receiving station configured to implement a method for receiving a signal according to claim 13.

**17.** A Satellite configured to implement a method for repeating a signal according to claim 14.

**19**

FIG.1

FIG.2

FIG.3

Sélection des satellites — 401

Calcul des décalages par satellite — 402

Calcul d'un signal pré compensé par satellite — 403

Emission des signaux pré compensés — 404

FIG.4

```
┌─────────────────────────────────┐
│      Sélection des satellites    │ ～ 501
└─────────────────────────────────┘
              │
              ▼
┌─────────────────────────────────┐
│   Calcul des décalages par       │ ～ 502
│          satellite               │
└─────────────────────────────────┘
              │
              ▼
┌─────────────────────────────────┐
│      Réception de signaux        │ ～ 503
└─────────────────────────────────┘
              │
              ▼
┌─────────────────────────────────┐
│   Calcul d'un signal post        │ ～ 504
│      compensé par satellite      │
└─────────────────────────────────┘
              │
              ▼
┌─────────────────────────────────┐
│      Sommation des signaux       │ ～ 505
└─────────────────────────────────┘
              │
              ▼
```

# FIG.5

Réception d'un signal — 601

Calcul de décalages
émetteur / satellite — 602

Calcul de décalages
satellite / récepteur — 603

Calcul d'un signal compensé — 604

Emission du signal compensé — 605

FIG.6

## RÉFÉRENCES CITÉES DANS LA DESCRIPTION

**Documents brevets cités dans la description**

- FR 1401510
- EP 2587691 A1
- WO 0191310 A2